# EUROPEAN PATENT SPECIFICATION

(11) **EP 2 720 286 B1**
(45) Date of publication and mention of the grant of the patent: **22.11.2017**
(21) Application number: 13164368.6
(22) Date of filing: 18.04.2013
(51) Int. Cl.: H01M 2/04, H01M 2/02

(54) **Secondary battery**
Sekundärbatterie
Batterie secondaire

(30) Priority: 09.10.2012 US 201261711712 P; 14.03.2013 US 201313803369
(43) Date of publication of application: 16.04.2014
(73) Proprietor: Samsung SDI Co., Ltd., Yongin-si, Gyeonggi-do (KR)
(72) Inventor: Cho, Ho-Jae, Gyeonggi-do (KR)
(74) Representative: Mounteney, Simon James

(56) References cited:
- EP-A1- 2 058 877
- EP-A1- 2 405 508
- FR-A- 1 218 634
- US-A1- 2009 246 621

## Description

### BACKGROUND

### 1. Field

An aspect of the present invention relates to a secondary battery.

### 2. Description of the Related Art

Recently, secondary batteries that use a non-aqueous liquid electrolyte have variously been used as power sources of portable electronic devices. As the portable electronic devices are used in various fields, demands on the secondary battery are rapidly increasing. A secondary battery can be reversibly charged/discharged many times, and thus is economically and environmentally efficient. Accordingly, the use of secondary batteries is encouraged.

As a decrease in the size and weight of the electronic devices is required, a decrease in the size and weight of the secondary battery is also required. Accordingly, a variety of studies have been conducted to develop a secondary battery of which size and weight are reduced while maintaining safety and reliability without lowering the capacity of the secondary battery.

FR 1 218 634 A discloses a battery having a case with a recessed mounting portion and a cover having an extension portion that is accommodated within the mounting portion.

### SUMMARY

The present invention sets out to provide a secondary battery in which size is reduced.

The invention also seeks to provide a secondary battery in which volume is reduced as compared with its capacity.

According to the present invention, there is provided a secondary battery as set out in Claim 1.

Preferred features of the invention are set out in Claims 2 to 9.

### BRIEF DESCRIPTION OF THE DRAWINGS

The accompanying drawings, together with the description, illustrate reference example batteries and embodiments of the present invention, and serve to explain the principles of the present invention.
FIG. 1 is a perspective view of a secondary battery.
FIG. 2A is a perspective view showing the secondary battery of Figure 1.
FIG. 2B is an exploded perspective view of the secondary battery of FIG. 1.
FIG. 3A is a perspective view of a cover of the battery of Figure 1.
FIG. 3B is a perspective view showing a lower portion of the cover of FIG. 3A.
FIG. 4 is a perspective view showing a battery case and an electrode assembly, shown in FIG. 1.
FIG. 5A is a sectional view taken along line I-I of FIG. 2A.
FIG. 5B is a sectional view taken along line II-II of FIG. 4.
FIG. 6 is a perspective view of a cover of another battery.
FIG. 7 is a perspective view of a battery of the battery.
FIG. 8 is a sectional view showing a state in which the cover and the battery case are coupled together.
FIG. 9 is a perspective view showing a cover and a battery case of still another battery.
FIG. 10 is a perspective view showing a cover and a battery case according to still another battery.
FIG. 11 is a perspective view showing a lower portion of the cover of FIG. 10.
FIG. 12 is a sectional view taken along line I-I of FIG. 2A according to an embodiment of the present invention illustrating a stepped mounting portion.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention, which is set out in the claims. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, reference example batteries and an embodiment of the present invention will be described in detail with reference to the accompanying drawings.

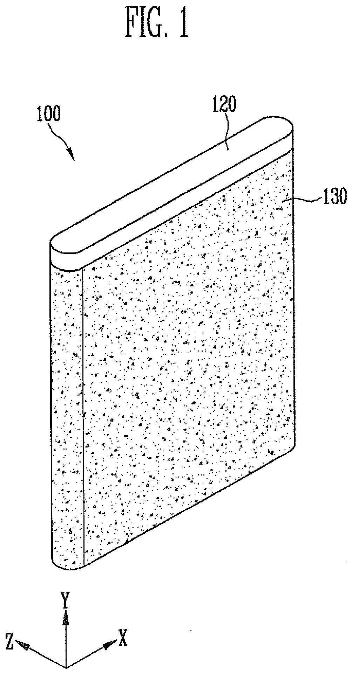

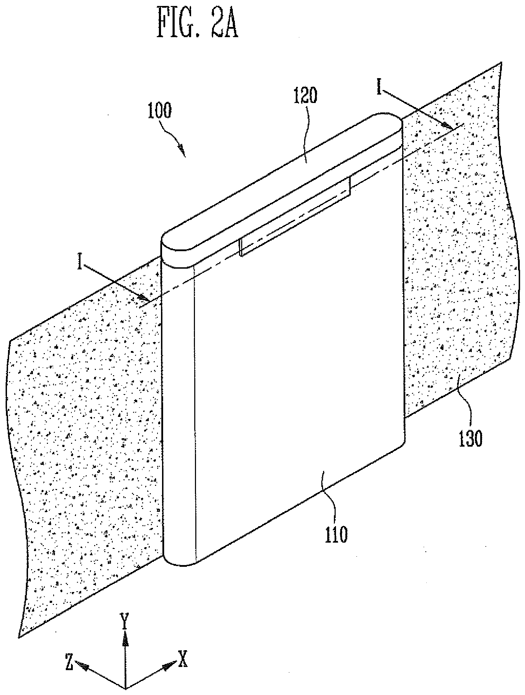

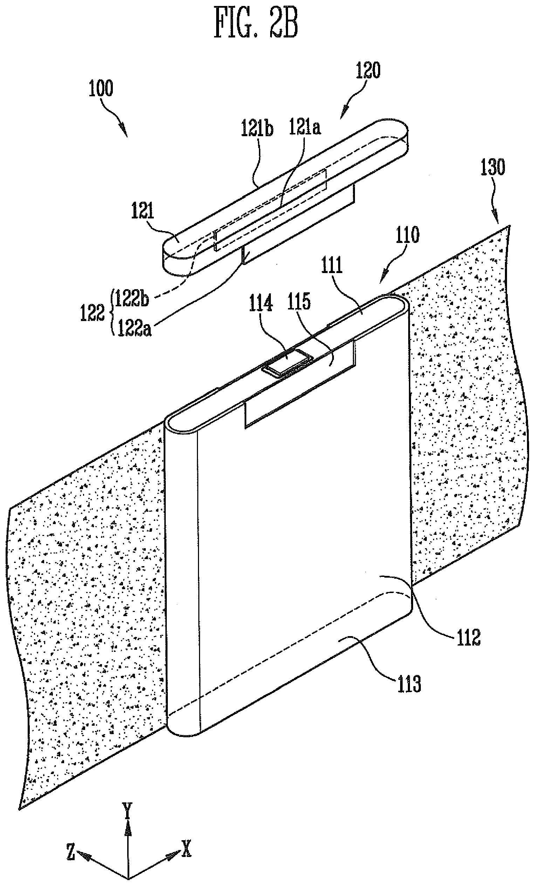

FIG. 1 is a perspective view of a secondary battery. FIG. 2A is a perspective view showing the secondary battery and a label. FIG. 2B is an exploded perspective view of the secondary battery of FIG. 1.

The secondary battery 100 includes a battery case 110 having a first surface 111, and a cover 120 that covers at least a portion of the first surface 111. The cover 120 includes an extension portion 122 that covers portions of a second surface 112 of the battery case 110, which is vertically connected to the first surface 111 of the battery case 110. The second surface 112 includes a mounting portion 115 on which the extension portion 122 is mounted, and the mounting portion 115 is recessed inward from a peripheral portion of the battery case 110.

The secondary battery 100 further includes a label 130 that covers the second surface 112 of the secondary battery 100, and the label 130 covers the extension portion 122 of the cover 120. After the cover 120 is mounted on the first surface 111 of the battery case 110, the label 130 is provided to surround the second surface 112 of the battery case 110. In this case, the extension portion 122 of the cover 120 is extended to cover the at least one portion of the second surface 112, and therefore is fixed together with the second surface 112 by the label 130. The extension portion 122 is inserted into the mounting portion 115 and the label 130 firmly fixes the extension portion 122 together with the second surface 112, so that it is possible to improve the coupling between the cover 120 and the battery case 110. The label 130 is composed of a sheet-shaped insulating member and an adhesive member formed on the insulating member. Hereinafter, the configuration of this battery will be described in detail with reference to FIGS. 1 to 2B.

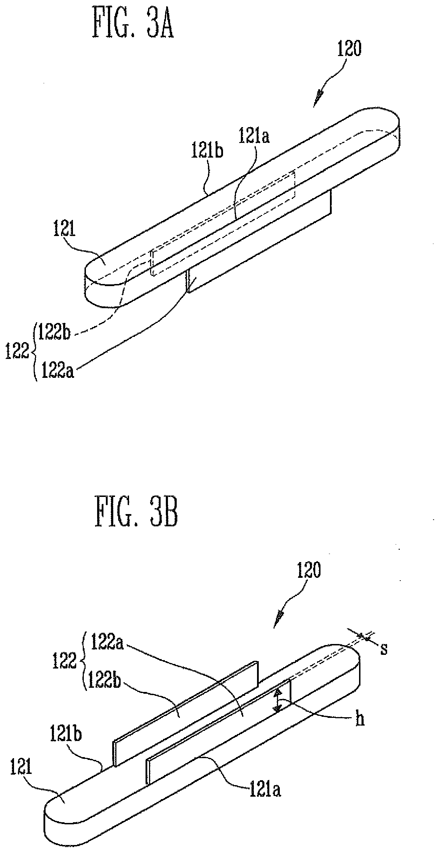

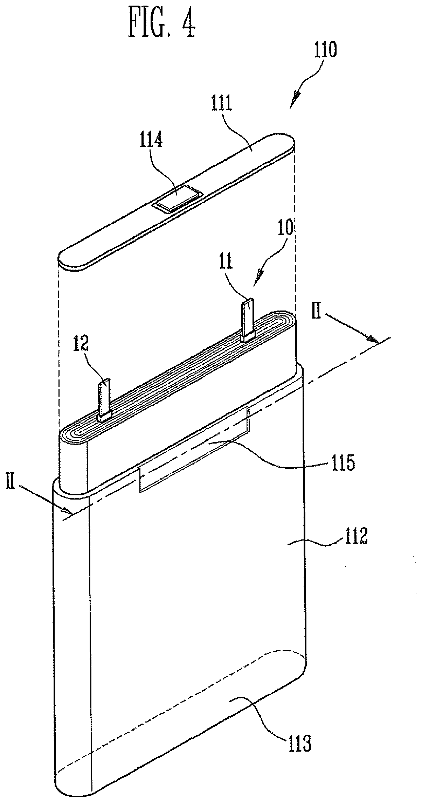

FIG. 3A is a perspective view of the cover of this battery. FIG. 3B is a perspective view showing a lower portion of the cover of FIG. 3A. FIG. 4 is a perspective view showing the battery case and an electrode assembly, shown in FIG. 1.

Referring to FIGS. 3A and 3B, the cover 120 includes a base portion 121 provided in a shape corresponding to the first surface 111, and the extension portion 122 extended from the base portion 121 so as to cover respective portions of the second surface 112. The rib 122 includes first and second flanges 122a and 122b respectively extended from one side 121a and an opposite side 121b of the base portion 121. The first and second flanges 122a and 122b are provided in parallel with each other.

The base portion 121 is provided in parallel with the first surface 111 so as to be mounted on the first surface 111 of the battery case 110, and the first and second flanges 122a and 122b are provided to extend perpendicular to the base portion 121 from the one side 121a and the other side 121b. More specifically, the first and second flanges 122a and 122b each extend from the base portion 121 so as to be parallel with the second surface 112 and perpendicular to the first surface 111. The first and second flanges 122a and 122b are provided so that outer surfaces of the first and second flanges 122a and 122b are parallel with those of the one and the other sides of the base portion 121. Thus, the outer surfaces of the base portion 121 and the first or second flange 122a and 122b at the side of the cover 120 can be provided on the approximately same plane without any protruded portion.

The interval between the outer surfaces of the first and second flanges 122a and 122b corresponds to the maximum thickness of the battery case 120. Since the battery case 120 is inserted between the first and second flanges 122a and 122b, the interval between outer surfaces of the pair of mounting portions 115 in the battery case 120 is provided to correspond to the interval between inner surfaces of the first and second flanges 122a and 122b.

The thickness s of each of the first and second flanges 122a and 122b is from 0.1 to 0.2mm in this battery. In a case where the thickness s of each of the first and second flanges 122a and 122b is less than 0.1 mm, it is difficult to manufacture the cover 120 through injection molding. In a case where the thickness s of each of the first and second flanges 122a and 122b exceeds 0.2mm, it is difficult to provide a space in which each of the first and second ribs 122a and 122b can be inserted into a respective mounting portion 115, and therefore, each of the first and second flanges 122a and 122b might in such a case protrude from the peripheral portion of the mounting portion 115. Further, the thickness of the portion at which each mounting portion 115 is provided in the second surface 112 would need to be relatively thin, and therefore, the strength of the battery case 110 may be lowered.

The longitudinal length h parallel with the second surface in each of the first and second flanges 122a and 122b may be extended up to the longitudinal length of the battery case 110 from a minimum of 3mm. In a case where the longitudinal length h is less than 3mm, each of the first and second flanges 122a and 122b cannot be stably mounted on the mounting portion 115, and hence the cover 120 is easily detached from the battery case 110. Therefore, the cover 120 cannot be stably fixed to the battery case 110. In a case where the longitudinal length h exceeds the longitudinal length of the battery case 110, the entire length of the secondary battery 100 may be unnecessarily increased.

Referring to FIG. 4, an electrode assembly 10 and an electrolyte are provided in the battery case 110. The electrode assembly 10 may be manufactured by winding or stacking positive and negative electrode plates having different polarities and a separator interposed between the positive and negative electrode plates. The electrolyte facilitates the movement of current between the positive and negative electrode plates, and positive and negative electrode tabs 11 and 12 attached to the positive and negative electrode plates are electrically connected to the first surface 111 and an electrode terminal 114 provided to the first surface 111, respectively. The battery case 110 may be made of aluminum, steel or the like. The thickness of the battery case 110 may be from 0.2 to 0.5mm.

The electrode terminal 114 is provided on the first surface 111, and the battery case 110 further includes a third surface 113 opposite to the first surface 111. The first and third surfaces 111 and 113 are provided in parallel with each other, and the second surface 112 is perpendicular to the first and third surfaces 111 and 113 so that the first and third surfaces 111 and 113 can be connected through the second surface 112. Although it has been described in this reference example that the cover 120 is provided only on the first surface 111 for convenience of illustration, the present invention is not limited thereto. For example the assembly may be provided with two covers which respectively cover the first and third surfaces 111 and 113.

Each mounting portion 115 is provided in a shape corresponding to the flange 122 mounted on the mounting portion 115. In this example, the first and second flanges 122a and 122b are provided to have sizes corresponding to each other, and accordingly, the mounting portions 115 are also provided to have shapes corresponding to each other.

The base portion 121 of the cover 120 is provided in a planar shape and may be further provided with a space formed in the inside of the base portion 121. That is, the base portion 121 may be further provided with a space formed in the opposite direction of the first and second flanges 122a and 122b, based on the surfaces of the base portion 121 to which the respective first and second flanges 122a and 122b are connected. The space may be used as a space in which a portion protruded from the first surface 111, a separate protection device or the like is accommodated.

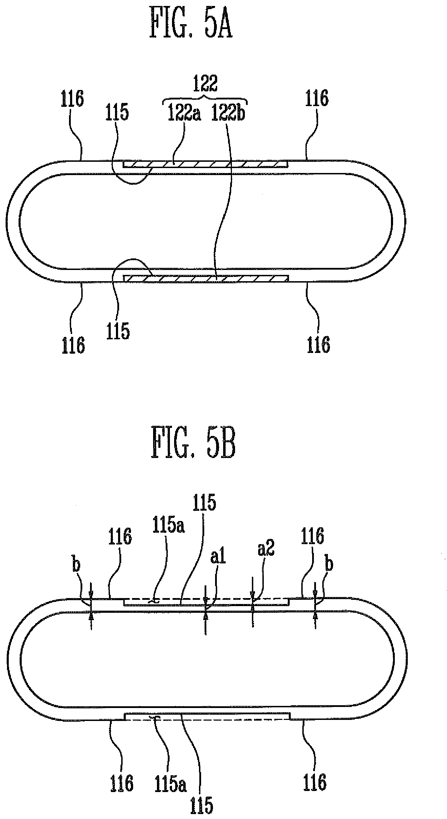

FIG. 5A is a sectional view taken along line I-I of FIG. 2A. FIG. 5B is a sectional view taken along line II-II of FIG. 4.

Referring to FIGS. 5A and 5B, the outer surface of the second surface is recessed from a contiguous peripheral portion 116 of the mounting portion 115 so that the mounting portion 115 has a portion 115a recessed inward, whilst the inner surface of the second surface is flat. In other cases the mounting portion may be recessed relative to a portion of the second surface that is situated at some other location in a region adjacent the mounting portion. Consequently the thickness a1 of the mounting portion 115 is thinner than that b of the peripheral portion 116, and the depth a2 of the recessed portion 115a on the mounting portion 115 corresponds to that of each of the first and second flanges 122a and 122b. Thus, the recessed portion 115a on the mounting portion 115 can be offset by each of the first and second flanges 122a and 122b, and the mounting portion 115 having each of the first and second ribs 122a and 122b mounted thereon can form the same plane with the peripheral portion 116 of the mounting portion 115.

In a secondary battery, it is very important that the size and weight of the secondary battery are reduced while maintaining the capacity of the secondary battery. Therefore, the safety and reliability of the secondary battery should be equally maintained while reducing the size and weight of the secondary battery. In this secondary battery, the flanges are provided to the cover that covers the first surface, so that the cover can be firmly fixed to the battery case. Further, each flange is provided without any protruding portion by the mounting portion provided to the battery case, and thus it is possible to prevent an increase of volume regardless of the capacity of the secondary battery.

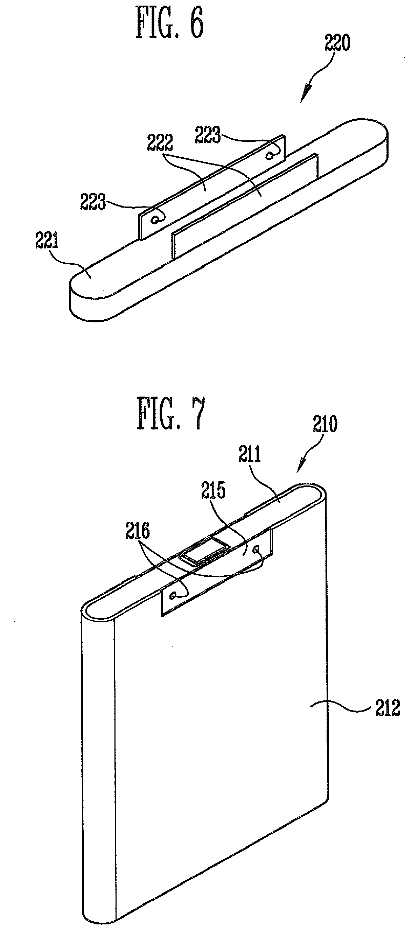

Hereinafter, other batteries will be described with reference to FIGS. 6 to 10. Contents of these batteries, except the following contents, are similar to those of the battery described with reference to FIGS. 1 to 5B, and therefore, their detailed descriptions will be omitted.

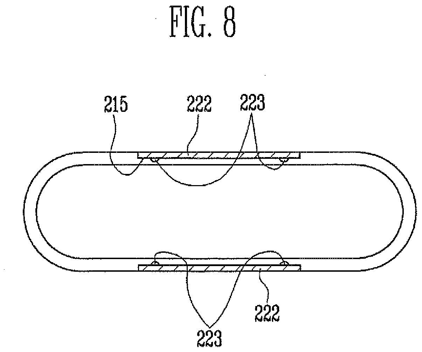

FIG. 6 is a perspective view of a cover according to another battery. FIG. 7 is a perspective view of a battery case according to this battery. FIG. 8 is a sectional view showing a state in which the cover and the battery case are coupled together.

Referring to FIGS. 6 to 8, in this secondary battery, the cover 220 that covers a first surface 211 includes a base portion 221 and an extension portion 222 extended from the base portion 221, and a second surface 212 of the battery case 210 is provided with a mounting portion 215 recessed inward so that the extension portion 222 is mounted on the mounting portion 215. The mounting portion 215 is provided to be recessed inward, so that after the extension portion 222 is mounted on the mounting portion 215, the thickness of the mounting portion 215 is approximately similar to that of a peripheral portion of the mounting portion 215.

First and second fastening portions 223 and 216 are provided on the extension portion 222 and the mounting portion 215, respectively. That is, the first fastening portion 223 is provided in an inner surface of the extension portion 222, and the second fastening portion 216 fastened to the first fastening portion 223 is provided in an outer surface of the mounting portion 215. In this example, the first and second fastening portions 223 and 216 are fastened through groove-projection coupling although hook coupling is one of many suitable alternatives. After the battery case 210 is inserted between a pair of flanges 222 of the extension portion 222, the cover 220 is moved toward a lower portion of the battery case 210, so that the battery case 210 and the cover 220 can be coupled to each other. In this case, the first fastening portion 223 provided in the flanges 222 and the second fastening portion 216 provided in the mounting portion 215 can be easily fastened to each other, and the cover 220 can be firmly fixed to the battery case 210.

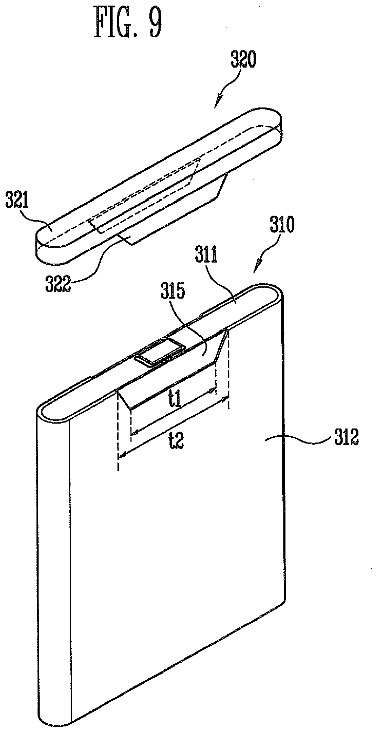

FIG. 9 is a perspective view showing a cover and a battery case according to still another battery.

Referring to FIG. 9, a portion of each mounting portion 315 provided in a second surface 312 of the battery case 310 is tapered. That is, the mounting portion 315 is provided in a tapered shape so that the width of the mounting portion 315 is gradually decreased in a direction distant from a first surface 311 of the battery case 310. Therefore, in each mounting portion 315, the width t2 of a portion adjacent to the first surface 311 is greater than that t1 of a portion most distant from the first surface 311.

The cover 320 includes a base portion 321 corresponding to the first surface 311, and flanges 322 extended in the direction of the battery case 310 from both end portions of the base portion 321. The cover 320 may be coupled to the battery case 310 on the first surface 311 of the battery case 310. The flanges 322 each have a shape corresponding to the mounting portions 315. More specifically, each flange 322 has a tapered shape in which the width of an upper portion of the flange 322 is greater than that of a lower portion of the flange 322. Thus, when the cover 320 and the battery case 310 are coupled to each other, the most narrow width of each flange 322 is inserted in the narrowest width of a respective mounting portion 315, and accordingly, the flanges 322 can be easily accommodated in mounting portions 315. Further, the contact area between the flanges 322 and the mounting portion 315 is increased, so that it is possible to increase the coupling between the flanges 322 and the mounting portion 315.

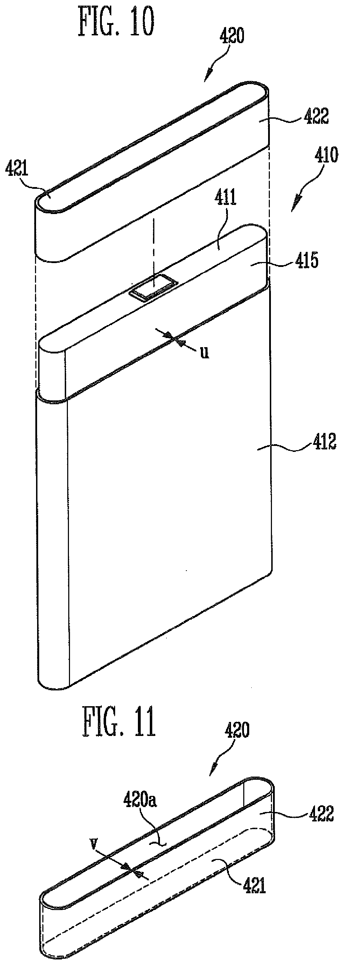

FIG. 10 is a perspective view showing a cover and a battery case according to still another battery. FIG. 11 is a perspective view showing a lower portion of the cover of FIG. 10.

In the battery case 410 according to this reference example an upper portion of the battery case 410 may be inserted into the cover 420. The cover 420 coupled to the battery case 410 may include a base portion 421 opposite to a first surface 411 of the battery case 410, and a skirt 422 integrally provided along the outer circumferential surface of the base portion 421. That is, the cover 420 is provided with an accommodating portion 420a that is a space formed by the base portion 421 and the skirt 422, and at least one portion of the battery case 410 may be inserted into the accommodating portion 420a.

A mounting portion 415 corresponding to the skirt 422 is provided at a portion connected to the first surface 411 from a second surface 412. The portion of the second surface 412 adjacent to the first surface 411 of the battery case 410 may be provided to be recessed from the portion at which the second surface is not adjacent to the first surface 411. Since the mounting portion 415 is provided in a shape corresponding to the skirt 422, the mounting portion 415 may be entirely provided at the upper portion of the battery case 410 adjacent to the first surface 411 of the battery case 410. Therefore, the thickness of the upper portion of the second surface 412 in the direction vertical to the first surface 411 is provided thinner than that of the lower portion of the second surface 412.

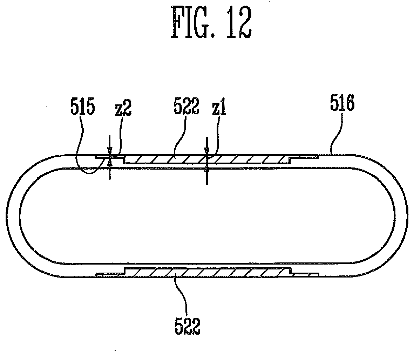

FIG. 12 is a sectional view taken along line I-I of FIG. 2A according to an embodiment of the present invention illustrating a stepped mounting portion. Referring to FIG. 12, the outer surface of the second surface is provided to be recessed from a peripheral portion 516 of the mounting portion 522 so that the mounting portion 522 has stepped recessed portions 515 and 522, and the inner surface of the second surface may be provided to be flat. That is, the thickness of the mounting portion 522 may be provided thinner than the thickness of peripheral portion 516. Further, the depth z2 of the stepped recess portion 515 is less than the depth z1 of the stepped recess portion 522, and the depth z1 and z2 of the recessed portions 522 and 515 are provided to correspond to that of each of the first and second extension members 122a and 122b. Thus, the recessed portion 115a on the mounting portion 115 is offset by each of the first and second extension members 122a and 122b, and the mounting portion 115 having each of the first and second extension members 122a and 122b mounted thereon forms the same plane with the peripheral portion 516 of the mounting portion 115.

While the present invention has been described in connection with certain embodiments, it is to be understood that the invention is not limited to the disclosed embodiments, but, on the contrary, is intended to cover various modifications and equivalent arrangements included within the scope of the appended claims.

## Claims

1. A secondary battery (100) comprising:
a case (110) having a first surface (111) and a second surface (112) perpendicular to the first surface;
an electrode assembly (10) and an electrolyte disposed inside the case; and
a cover (120) that is fitted to the case (110) and includes a base portion (121) that covers at least one portion of the first surface (111);
wherein;
the second surface (112) is provided with a mounting portion (115);
the mounting portion (115) is recessed inwardly relative to a peripheral portion (516) of the second surface (112) that is situated in a region adjacent the mounting portion (115);
the cover (120) further includes at least one extension portion (122) that extends from the base portion (121) and is accommodated within the mounting portion (115);
**characterised in that**
an outer surface of the second surface (112) is provided to be recessed from the peripheral portion (516) of the mounting portion (522) so that the mounting portion (522) has first and second stepped recessed portions (515, 522) wherein a depth (z2) of the first stepped recess portion (515) is less than the depth (z1) of the second stepped recess portion (522) and wherein the first stepped recessed portion (515) is adjacent to the peripheral portion (516) of the mounting portion (115);
thicknesses of the extension portion (122) correspond to the different depths (z1, z2) such that the stepped recessed portions (515, 522) offset the extension portion (122) such that an external surface of the extension portion (122) is flush with an external surface of the peripheral portion (516); and
a label(130) at least partly covers the second surface(112) of the case(110) and the extension portion(122).

2. A secondary battery according to claim 1, wherein the base portion (121) has a shape corresponding to the first surface (111).

3. A secondary battery according to claim 1 or 2, wherein the extension portion (122) includes a flange.

4. A secondary battery according to any preceding claim, wherein a wall thickness of the mounting portion is less than a wall thickness of the peripheral portion (516).

5. A secondary battery according to claim 4, wherein an inner surface portion of the case (110) corresponding to both the mounting portion and the peripheral portion (516) is flat.

6. A secondary battery according to any preceding claim, wherein the mounting portion has a peripheral shape corresponding to that of the extension portion (122).

7. A secondary battery according to any preceding claim, wherein the extension portion (122) is integrally provided on an outer circumferential surface of the base portion (121).

8. A secondary battery according to one of claims 1 to 7, wherein the extension portion includes two substantially parallel flanges (122), each said flange (122) being situated on a respective one of first and second mutually opposite sides (121a, 121b) of the base portion (121); and the second surface (112) is provided with two mounting portions, each said flange (122) being mounted on a respective one of the said mounting portions.

9. A secondary battery according to claim 8, wherein the interval between respective outer surfaces of the extension portions corresponds to a maximum thickness of the case (110).

## Patentansprüche

1. Sekundärbatterie (100), umfassend:
ein Gehäuse (110) mit einer ersten Oberfläche (111) und einer zweiten Oberfläche (112), die senkrecht zur ersten Oberfläche ist;
eine Elektrodenbaugruppe (10) und einen Elektrolyten, die innerhalb des Gehäuses angeordnet sind; und
einen Deckel (120), der auf das Gehäuse (110) aufgesetzt ist und einen Basisabschnitt (121) aufweist, der mindestens einen Abschnitt der ersten Oberfläche (111) bedeckt;
worin:
die zweite Oberfläche (112) mit einem Montageabschnitt (115) versehen ist;
der Montageabschnitt (115) relativ zu einem Umfangsabschnitt (516) der zweiten Oberfläche (112), der in einem an den Montageabschnitt (115) angrenzenden Bereich gelegen ist, vertieft ist;
der Deckel (120) ferner mindestens einen Verlängerungsabschnitt (122) aufweist, der sich vom Basisabschnitt (121) erstreckt und innerhalb des Montageabschnitts (115) aufgenommen wird;
**dadurch gekennzeichnet, dass**:
eine Außenfläche der zweiten Oberfläche (112) dafür vorgesehen ist, vom Umfangsabschnitt (516) des Montageabschnitts (522) vertieft zu sein, sodass der Montageabschnitt (522) einen ersten und zweiten abgestuften vertieften Abschnitt (515, 522) hat, worin eine Tiefe (z2) des ersten abgestuften vertieften Abschnitts (515) geringer als die Tiefe (z1) des zweiten abgestuften vertieften Abschnitts (522) ist und worin der erste abgestufte vertiefte Abschnitt (515) an den Umfangsabschnitt (516) des Montageabschnitts (115) angrenzt;
Dicken des Verlängerungsabschnitts (122) den unterschiedlichen Tiefen (z1, z2) entsprechen, sodass die abgestuften vertieften Abschnitte (515, 522) den Verlängerungsabschnitt (122) ausgleichen, sodass eine Außenfläche des Verlängerungsabschnitts (122) mit einer Außenfläche des Umfangsabschnitts (516) bündig ist; und
ein Etikett (130) die zweite Oberfläche (112) des Gehäuses (110) und den Verlängerungsabschnitt (122) zumindest teilweise bedeckt.

2. Sekundärbatterie nach Anspruch 1, worin der Basisabschnitt (121) eine Form hat, die der ersten Oberfläche (111) entspricht.

3. Sekundärbatterie nach Anspruch 1 oder 2, worin der Verlängerungsabschnitt (122) einen Steg aufweist.

4. Sekundärbatterie nach einem der vorhergehenden Ansprüche, worin eine Wanddicke des Montageabschnitts geringer als eine Wanddicke des Umfangsabschnitts (516) ist.

5. Sekundärbatterie nach Anspruch 4, worin ein Innenflächenabschnitt des Gehäuses (110), der sowohl dem Montageabschnitt als auch dem Umfangsabschnitt (516) entspricht, flach ist.

6. Sekundärbatterie nach einem der vorhergehenden Ansprüche, worin der Montageabschnitt eine Umfangsform hat, die der des Verlängerungsabschnitts (122) entspricht.

7. Sekundärbatterie nach einem der vorhergehenden Ansprüche, worin der Verlängerungsabschnitt (122) in einem Stück auf einer Außenumfangsfläche des Basisabschnitts (121) bereitgestellt ist.

8. Sekundärbatterie nach einem der Ansprüche 1 bis 7, worin der Verlängerungsabschnitt zwei im Wesentlichen parallele Flansche (122) aufweist, wobei jeder Flansch (122) auf einer jeweiligen von erster und zweiter einander gegenüberliegenden Seite (121a, 121b) des Basisabschnitts (121) liegt; und die zweite Oberfläche (112) mit zwei Montageabschnitte versehen ist, wobei jeder Flansch (122) auf einem jeweiligen der besagten Montageabschnitte angebracht ist.

9. Sekundärbatterie nach Anspruch 8, worin der Abstand zwischen jeweiligen Außenflächen der Verlängerungsabschnitte einer maximalen Dicke des Gehäuses (110) entspricht.

## Revendications

1. Batterie secondaire (100) comprenant :
un boîtier (110) qui comporte une première surface (111) et une seconde surface (112) qui est perpendiculaire à la première surface ;
un assemblage d'électrodes (10) et un électrolyte qui est disposé à l'intérieur du boîtier ; et
un couvercle (120) qui est ajusté sur le boîtier (110) et qui inclut une partie de base (121) qui recouvre au moins une partie de la première surface (111) ;
dans laquelle :
la seconde surface (112) est munie d'une partie de montage (115) ;
la partie de montage (115) est évidée vers l'intérieur par rapport à une partie périphérique (516) de la seconde surface (112) qui est située dans une région qui est adjacente à la partie de montage (115) ;
le couvercle (120) inclut en outre au moins une partie d'extension (122) qui s'étend depuis la partie de base (121) et qui est logée à l'intérieur de la partie de montage (115) ;
**caractérisée en ce que** :
une surface externe de la seconde surface (112) est constituée de manière à être évidée depuis la partie périphérique (516) de la partie de montage (522), de telle sorte que la partie de montage (522) comporte des première et seconde parties évidées étagées (515, 522), dans laquelle une profondeur (z2) de la première partie évidée étagée (515) est inférieure à la profondeur (z1) de la seconde partie évidée étagée (522) et dans laquelle la première partie évidée étagée (515) est adjacente à la partie périphérique (516) de la partie de montage (115) ;
des épaisseurs de la partie d'extension (122) correspondent aux profondeurs différentes (z1, z2), de telle sorte que les parties évidées étagées (515, 522) décalent la partie d'extension (122), de telle sorte qu'une surface externe de la partie d'extension (122) affleure une surface externe de la partie périphérique (516) ; et
une étiquette (130) recouvre au moins partiellement la seconde surface (112) du boîtier (110) et la partie d'extension (122).

2. Batterie secondaire selon la revendication 1, dans laquelle la partie de base (121) présente une forme qui correspond à celle de la première surface (111).

3. Batterie secondaire selon la revendication 1 ou 2, dans laquelle la partie d'extension (122) inclut un flanc.

4. Batterie secondaire selon l'une quelconque des revendications précédentes, dans laquelle une épaisseur de paroi de la partie de montage est inférieure à une épaisseur de paroi de la partie périphérique (516).

5. Batterie secondaire selon la revendication 4, dans laquelle une partie de surface interne du boîtier (110) qui correspond à la fois à la partie de montage et à la partie périphérique (516) est plane.

6. Batterie secondaire selon l'une quelconque des revendications précédentes, dans laquelle la partie de montage présente une forme périphérique qui correspond à celle de la partie d'extension (122).

7. Batterie secondaire selon l'une quelconque des revendications précédentes, dans laquelle la partie d'extension (122) est constituée intégralement sur une surface circonférentielle externe de la partie de base (121).

8. Batterie secondaire selon l'une des revendications 1 à 7, dans laquelle la partie d'extension inclut deux flancs sensiblement parallèles (122), chaque dit flanc (122) étant situés sur l'un respectif de premier et second côtés mutuellement opposés (121a, 121b) de la partie de base (121) ; et la seconde surface (112) est munie de deux parties de montage, chaque dit flanc (122) étant monté sur l'une respective desdites parties de montage.

9. Batterie secondaire selon la revendication 8, dans laquelle l'intervalle entre des surfaces externes respectives des parties d'extension correspond à une épaisseur maximum du boîtier (110).
